# EUROPEAN PATENT SPECIFICATION

(11) **EP 2 698 569 B1**
(45) Date of publication and mention of the grant of the patent: **11.10.2017**
(21) Application number: 12180371.2
(22) Date of filing: 14.08.2012
(51) Int. Cl.: F16K 31/00, G05D 23/02

(54) **Regulation valve**
Regelventil
Soupape de régulation

(43) Date of publication of application: 19.02.2014
(73) Proprietor: Honeywell Technologies Sarl, 1180 Rolle (CH)
(72) Inventor: Diesterweg, German, 68519 Viernheim (DE); Weidner, Kurt, 73434 Aalen (DE)
(74) Representative: Sturm, Christoph

(56) References cited:
- EP-A1- 1 884 696
- WO-A1-2006/076732
- WO-A1-2007/118702
- WO-A1-2011/063862
- GB-A- 2 389 887
- US-A1- 2007 075 152

## Description

The invention relates to a regulation valve for a liquid like water, especially to a drinking water regulation valve for a drinking water circulation system.

In drinking water circulation systems it is necessary to provide a defined temperature of the drinking water circulated by the drinking water circulation system. A drinking water regulation valve used in such a drinking water circulation system needs to provide an accurate regulation of the flow rate of the drinking water through the drinking water regulation valve depending on the temperature of the drinking water, especially at relative low temperatures of the drinking water at which an accurate relative low flow rate of the drinking water through the regulation valve has to be provided. Similar requirements have to be fulfilled by regulation valves for circulation systems of other liquid mediums.

A regulation valve according to the prior art is disclosed by US 2007/075152 A1.

Against this background, a novel regulation valve is provided which provides an accurate regulation of the flow rate of the liquid medium through the regulation valve depending on the temperature of the liquid medium, especially at relative low temperatures of the liquid medium at which an accurate relative low flow rate of the liquid medium through the regulation valve has to be provided.

A regulation valve according to the present invention is defined in claim 1.

The invention provides a regulation valve providing an accurate regulation of the flow rate of the liquid medium through the regulation valve depending on the temperature of the liquid medium, especially at relative low temperatures of the liquid medium at which an accurate relative low flow rate of the liquid medium through the regulation valve has to be provided. The valve body of the valve insert does not move during operation of the regulation valve so that there is no risk that the same becomes blocked by containments of the liquid medium. The entire valve insert can easily be removed from the valve housing for service or replacement purposes. The thermo element acts together with the valve plunger and the first spring element in such a way that at relative low temperatures of the liquid medium the regulation valve is closed by the first spring force being larger than the thermo element force thereby providing a low high flow rate of the liquid medium, and that at relative high temperatures of the liquid medium the regulation valve is opened by the thermo element force being larger than the first spring force thereby providing a relative high flow rate of the liquid medium.

Preferred developments of the invention are provided by the dependent claims and the description which follows. Exemplary embodiments are explained in more detail on the basis of the drawing, in which:
- Figures 1a to 1c: show details of a regulation valve according to a first embodiment of the invention;
- Figures 2a to 2d: show details of a regulation valve according to a second embodiment of the invention;
- Figures 3a to 3b: show details of a comparative regulation valve.

The invention relates to a regulation valve for a liquid medium like water, especially to a drinking water regulation valve for a drinking water circulation system.

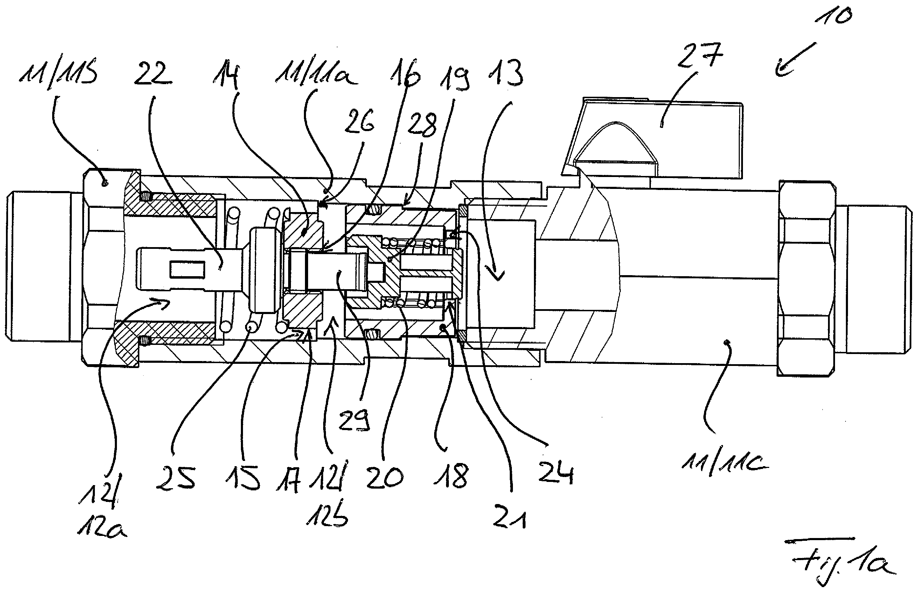

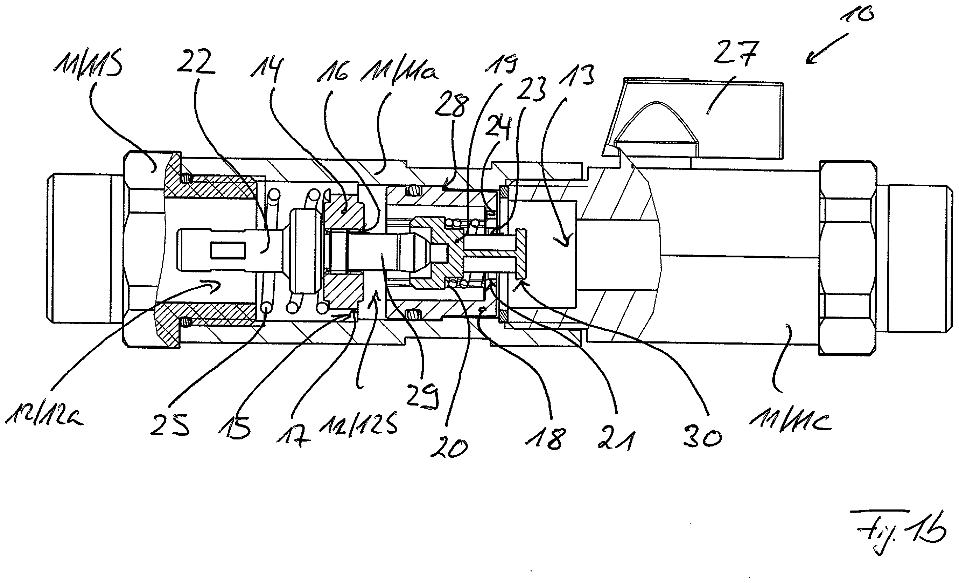

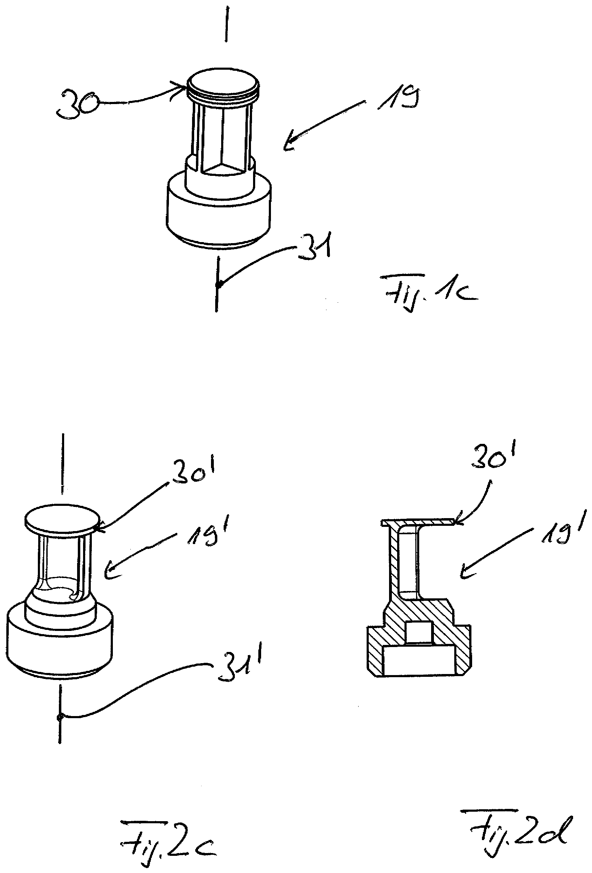

Figures 1a, 1b each show a cross sectional view of a regulation valve 10 according to a first preferred embodiment of the invention, wherein Figure 1 a shows the regulation valve in a closed status, wherein Figure 1b shows the regulation valve in an opened status and wherein Figure 1c shows a detail of said regulation valve 10.

The regulation valve 10 comprises a valve housing 11. The valve housing 11 provides a valve inlet chamber 12 for the liquid medium and a valve outlet chamber 13 for the liquid medium. The valve housing 11 shown in the embodiment of Figure 1 comprises a middle main section 11a and lateral connecting sections 11b, 11c being mounted together. The middle main section 11a of the valve housing 11 has a first end to which a first lateral connecting section 11b is mounted, preferably screwed, and a second end to which a second lateral connection section 11c carrying a shut-off element 27 is mounted, preferably screwed.

The valve inlet chamber 12 is provided by the main section 11a and the first connecting section 11b. The valve outlet chamber 13 is provided by the main section 11a and the second connecting section 11b. The regulation valve 10 is connectable to a circulation system through the connecting sections 11b, 11c.

The regulation valve 10 comprises a valve insert being positioned within said valve housing 11, namely with the main section 11a of the valve housing 11. Said valve insert comprise a valve body 18, a valve plunger 19 and a first spring element 20. The first spring element 20 is positioned between the valve body 18 and the valve plunger 19 and acts on the valve body 18 and the valve plunger 19.

Said valve body 18 separates the second inlet chamber 12 from the outlet chamber 13 and provides a valve seat 21 for a corresponding sealing surface 30 of said valve plunger 19. Said first spring element 20 provides a first spring force which tends close the regulation valve by bringing the sealing surface 30 of said valve plunger 19 in contact with said valve seat 21.

The regulation valve 10 further comprises a thermo element 22 being positioned directly in the flow of the liquid medium, namely in the embodiment of Figure 1 directly within the valve inlet chamber 12 of the regulation valve 10. Said thermo element 22 provides a thermo element force depending on the temperature of the liquid medium within the valve housing 11, namely in the embodiment of Figure 1 within the valve inlet chamber 12.

Said thermo element 22 is carrying said valve plunger 19 and is acting on the valve plunger 19. Said thermo element force provided by said thermo element 22 is acting against the first spring force provided by said first spring element 20 and thereby tends to open the regulation valve 10 by bringing the sealing surface 30 of said valve plunger 19 out of contact with said valve seat 21. Said thermo element 22 acts together with the valve plunger 19 and the first spring element 20 in such a way that at relative low temperatures of the liquid medium the regulation valve 10 is or becomes closed, thereby providing a relative low flow rate of the liquid medium through the regulation valve 10. At relative high temperatures of the liquid medium the regulation valve 10 is or becomes opened, thereby providing a relative high flow rate of the liquid medium through the regulation valve 10. The relative low flow rate is also often called minimum flow rate. The thermo element 22 is positioned directly in the flow of the liquid medium. This allows a quick and accurate reaction on a changing temperature of the liquid medium and therefore an accurate regulation of the flow rate of the liquid medium through the regulation valve 10 depending on the temperature of the liquid medium.

Said valve body 10 provides at least one relative large opening 23 which is opened when the regulation vale is opened at relative high temperatures of the liquid medium thereby providing the relative high flow rate. The or each relative large opening 23 is closed when the regulation vale is opened at relative low temperatures of the liquid medium thereby providing the relative low flow rate.

The or each relative large opening 23 of the valve body 18 is completely closed when the sealing surface 30 of the valve plunger 19 is in contact with the valve seat 21 of the valve body 18. The relative low flow rate or minimum flow rate through the regulation valve is provided by at least one additional, relative small opening 24 within the valve body 18. The or each additional, relative small opening 24 within the valve body 18 is opened when the sealing surface 30 of the valve plunger 19 is in contact with the valve seat 21 of the valve body 18 thereby providing a highly accurate relative low flow rate at relative low temperatures of the liquid medium. The or each additional, relative small opening 24 can be manufactured very precisely and the flow through the same does not depend on any other tolerances of the regulation valve 10.

The regulation valve 10 further comprises a mounting support 14 carrying said thermo element 22, wherein a subassembly comprising said mounting support 14, said thermo element 22 and said valve plunger 19 is mounted within an opening 15 of said valve housing 11, namely of the main section 11b of the valve housing 11. The mounting support 14 separates the valve inlet chamber 12 into two sub-chambers, namely into a first inlet sub-chamber 12a and a second inlet sub-chamber 12b. The second valve inlet sub-chamber 12b in positioned between the first valve inlet sub-chamber 12a and the valve outlet chamber 13.

The mounting support 14 allows a precise pre-assembling of a subassembly comprising said mounting support 14, said thermo element 22 and said valve plunger 19 outside the valve housing 11. The subassembly comprising said mounting support 14, said thermo element 22 and said valve plunger 19 can be easily installed into the valve housing 11. Further on, the subassembly can easily be easily removed from the valve housing 11 after the lateral connection section 11b has been unscrewed from the middle main section 11a.

Said mounting support 14 is provided by a disc-like or plate like element having a central opening 16 carrying a section of said thermo element 22, said disc-like or plate like element having an outer surface 17 that allows a flow of said liquid medium across said mounting support 14, namely from the first valve inlet sub-chamber 12a into the second valve inlet sub-chamber 12b.

The central opening 16 of said mounting support 14 carries a section of said thermo element 22. Another section of said thermo element 22 carries said valve plunger 19. A jacket 29 preferably made from a rubber material surrounds another section of said thermo element 22 extending between said mounting support 14 and said valve plunger 19.

The regulation valve 10 further comprises a second spring element 25 being positioned in the first valve inlet sub-chamber 12a. The second spring element 25 acts on the mounting support 14 in such a way that the second spring element 25 provides a second spring force which presses the mounting support 14 against a stroke 26 provided by the valve housing 11, namely in the opening 15 of the main section 11a of the main housing 11.

A first end of the second spring element 25 contacts the mounting support 14 and a second end of the second spring element 25 contacts a section of the valve housing 11. The second end of the second spring element 25 contacts the first connecting section 11b of the valve housing 11. The second spring force provided by the second spring element 25 presses the mounting support 14 against the stroke 26 provided by the main section 11a of the main housing 11 independently from the temperature of the liquid medium. In addition, the valve body 18 of the valve insert is pressed against an additional stroke 28 provided by the by the main section 11a of the main housing 11 independently from the temperature of the liquid medium. Neither the mounting support 14 nor the valve body 18 move during operation of the regulation valve 10 so that there is no risk that the same become blocked by containments of the liquid medium.

Due to the features that the second spring element 25 is positioned in the first valve inlet sub-chamber 12a and that the second spring element 25 acts on the mounting support 14 in such a way that the second spring element 25 provides a second spring force which tends to press the mounting support 14 against the stroke 26 provided by the valve housing 11, the operating pressure of the regulation valve 10 needs not to be taken in consideration for sizing the second spring element 25. The second spring element does not need to act on the valve body against the thermo element force and the operating pressure. This makes it possible to use an inexpensive second spring element 25 having a large tolerance with respect to the second spring force provided by the same.

A further advantage is that the valve body 18, the first spring element 20, the second spring element 25 and the subassembly comprising the mounting support 14, the thermo element 22 and the valve plunger 19 of the can easily be positioned in and removed from the valve housing 11, namely from the main section 11a of the main housing 11 when the first connection section 11b from valve housing 11 is disassembled from the main section 11a.

The valve body 18 of the valve insert is preferably made from a plastics material. This has the advantage that the same is resistant to corrosion which may be caused by cavitations in the liquid medium.

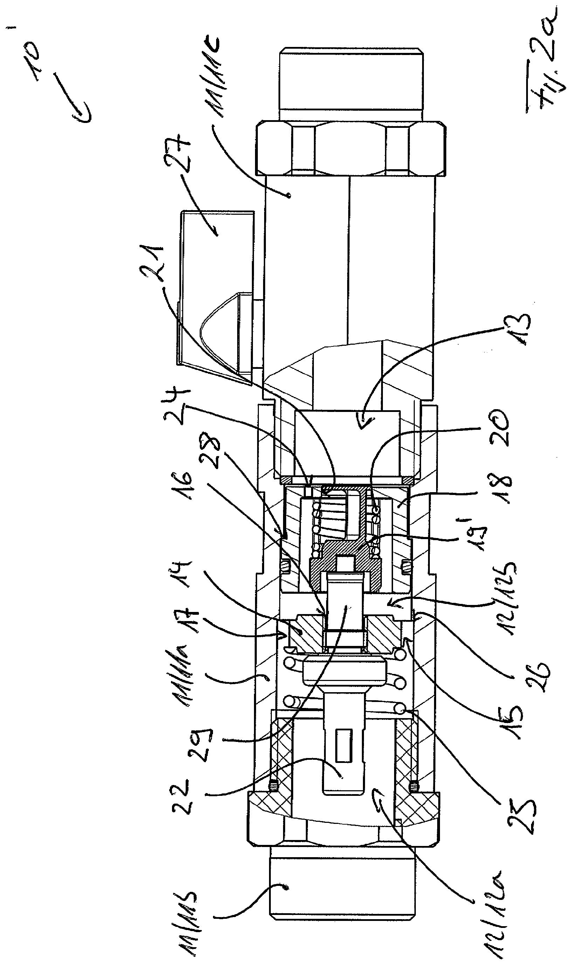

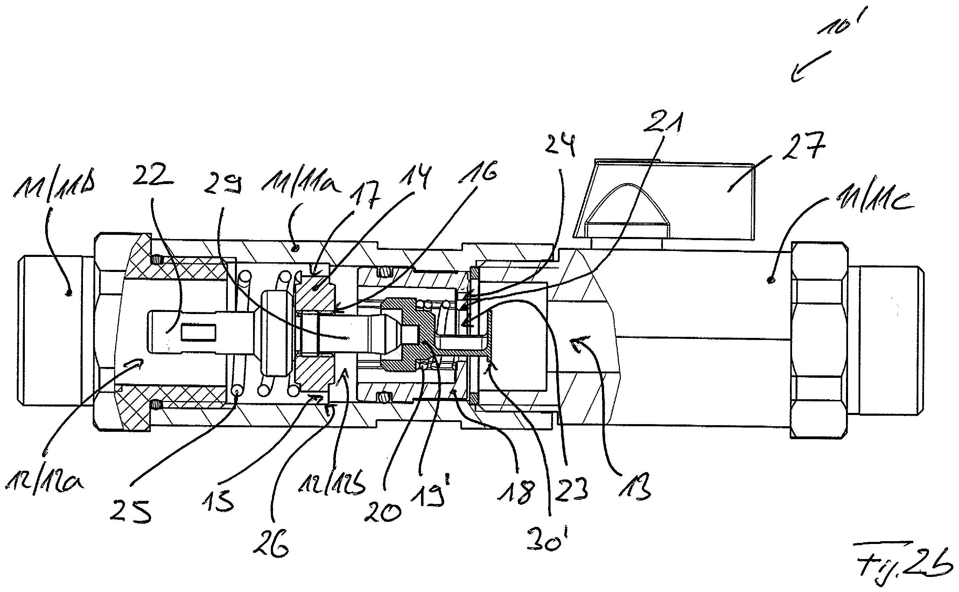

Figures 2a, 2b each show a cross sectional view of a regulation valve 10' according to a second preferred embodiment of the invention, wherein Figure 2a shows the regulation valve in a closed status, wherein Figure 2b shows the regulation valve 10' in an opened status and wherein Figures 2c, 2d shows a detail of said regulation valve 10'. The regulation valve 10' according to Figures 2a to 2d differs from the regulation valve 10 according to Figures 1a to 1c only by the design of the valve plunger 19, 19'. For that, identical reference signs are used for identical parts of the two regulation valves 10, 10'. For the regulation valve 10' only the differences of the valve plunger 19' will be described below. For all other details reference is made to above description of the regulation valve 10. The regulation valve 10 according to Figures 1a to 1c comprises a valve plunger 19 having a symmetric design relative to a longitudinal axis 31 of the same running in parallel to the moving direction of the valve plunger 19. The regulation valve 10' according to Figures 2a to 2d comprises a valve plunger 19' having a symmetric design relative to a longitudinal axis 31' of the same running in parallel to the moving direction of the valve plunger 19'. As a consequence, in the embodiment of Figures 1 a to 1c the liquid medium flows uniformly around or across the valve plunger 19 through the opening 23 when the regulation valve 10 is opened. In the embodiment of Figures 2a to 2d the liquid medium flows non-uniformly around or across the valve plunger 19' through the opening 23 when the regulation valve 10' is opened. The design of the valve plunger 19' is preferred because the same provides a better flow characteristic at relative low flow rates when the regulation valve 10' becomes opened by bringing the sealing surface 30' out of contact with the valve seat 21.

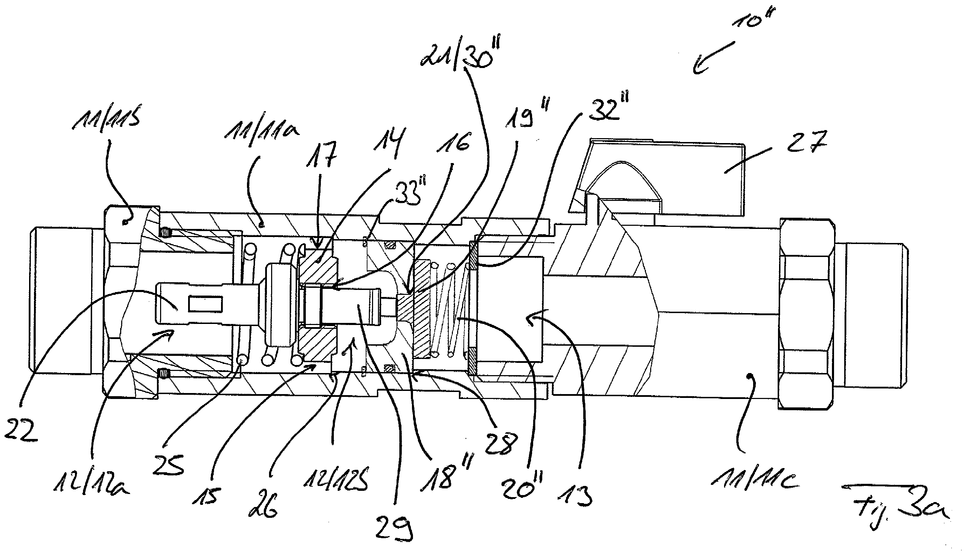

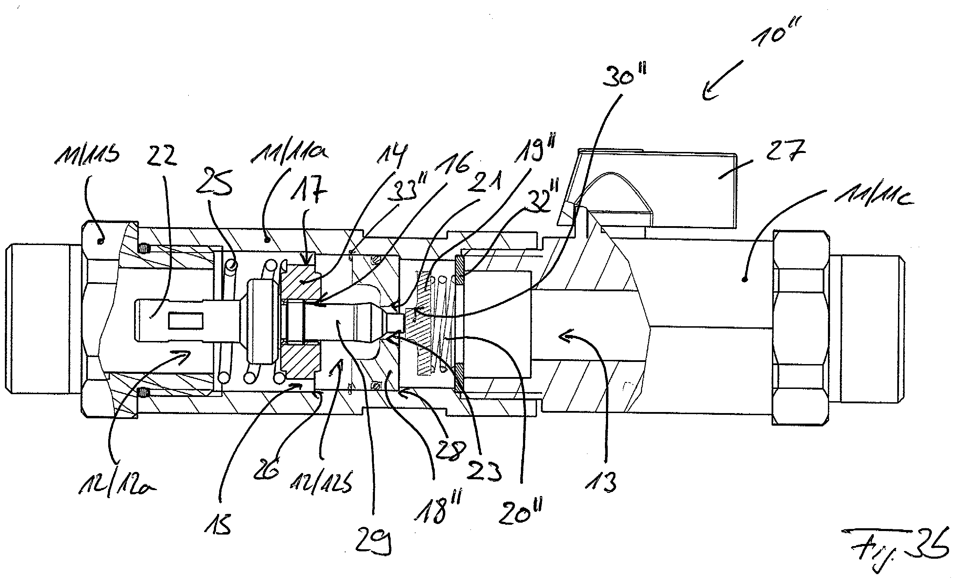

Figures 3a, 3b each show a cross sectional view of a comparative regulation valve 10" not covered by the invention, wherein Figure 3a shows the regulation valve 10" in a closed status, wherein Figure 3b shows the regulation valve 10" in an opened status. The regulation valve 10" according to Figures 3a and 3b differs from the regulation valve 10 according to Figures 1a to 1c by the design of the valve body 18", the valve plunger 19", the first spring element 20". Identical reference signs are used for identical parts of the two regulation valves 10, 10". For the regulation valve 10" only the differences of the valve body 18", the valve plunger 19" and the first spring element 20" will be described below. For all other details reference is made to above description of the regulation valve 10.

The valve body 18" of the regulation valve 10" according to Figures 3a and 3b comprises only the relative large opening 23 but not the relative small opening 24. For that, the minimum flow rate through the regulation valve 10" is zero when the regulation valve 10" is closed by pressing the sealing surface 30" of the valve plunger 19" against the valve seat 21 provided by the valve body 18". However, preferably the valve body 18" also comprises a relative small opening 24 to provide a minimum flow rate greater than zero.

The valve body 18" of the regulation valve 10" according to Figures 3a and 3b is kept in position by locking ring 33". In the embodiments of Figures 1 a to 1c and 2a to 2d such a locking ring is superfluous because of the position of the first spring elements 22 acting on the respective valve body 18.

The first spring element 20" of the regulation valve 10" according to Figures 3a and 3b is positioned between the valve plunger 19" and a supporting element 32" within the valve outlet chamber 13. The first spring element 20" contacts with a first end the valve plunger 19". With a second end the first spring element 20" contacts the supporting element 32". The design of Figures 1a to 1c is preferred because the same provides an easier assembly of the regulation valve.

### List of reference signs

- 10: regulation valve
- 10': regulation valve
- 10": regulation valve
- 11: valve housing
- 11a: main section of valve housing
- 11b: first connecting section of valve housing
- 11c: second connecting section of valve housing
- 12: valve inlet chamber
- 12a: first valve inlet sub-chamber
- 12b: second valve inlet sub-chamber
- 13: valve outlet chamber
- 14: mounting support
- 15: opening
- 16: opening
- 17: surface
- 18: valve body
- 18": valve body
- 19: valve plunger
- 19': valve plunger
- 19": valve plunger
- 20: first spring element
- 20": first spring element
- 21: valve seat
- 22: thermo element
- 23: relative large opening within the valve body
- 24: relative small opening within the valve body
- 25: second spring element
- 26: stroke
- 27: shut-off element
- 28: stroke
- 29: jacket
- 30: sealing surface
- 30': sealing surface
- 31: longitudinal axis
- 31': longitudinal axis
- 32": supporting element
- 33": locking ring

## Claims

1. Regulation valve for a liquid medium, especially for drinking water, comprising:
a valve housing (11) providing a valve inlet chamber (12) and a valve outlet chamber (13);
a valve insert being positioned within the valve housing (11), the valve insert comprising a valve plunger (19, 19') and a first spring element (20);
a thermo element (22) being positioned directly in the flow of the liquid medium and carrying the valve plunger (19, 19'), the thermo element (22) provides a thermo element force acting on the valve plunger (19, 19',) depending on the temperature of the liquid medium within the valve housing (11), wherein the thermo element force provided by the thermo element (22) is acting against the first spring force provided by the first spring element (20);
a mounting support (14) for the thermo element (22), the mounting support (14) dividing the valve inlet chamber (12) of the valve housing (11) in a first valve inlet sub-chamber (12a) and a second valve inlet sub-chamber (12b), wherein the second valve inlet sub-chamber (12b) is positioned between the first valve inlet sub-chamber (12a) and the valve outlet chamber (13);
a second spring element (25) being positioned in the first valve inlet sub-chamber (12a) and acting on the mounting support (14) in such a way that the second spring element (25) provides a second spring force which presses the mounting support against a stroke (26) provided by the valve housing (11),
**characterized in that**
the thermo element force provided by the thermo element (22) is acting against the first spring force provided by the first spring element (20) in such a way that an increasing temperature of the liquid medium tends to open the regulation valve and that a decreasing temperature of the liquid medium tends to close the regulation valve;
the valve insert further comprises a valve body (18),
the valve body (18) provides at least one relative large opening (23) which is completely closed at relative low temperatures of the liquid medium and which is opened at relative high temperatures of the liquid medium;
the valve body (18) provides at least one additional, relative small opening (24) which is open when the at least one relative large opening (23) is completely closed and when the at least one relative large opening (23) is opened.

2. Regulation valve as claimed in claim 1, **characterized in that** the first spring element (20) is positioned between the valve body (18) and the valve plunger (19, 19') within the second valve inlet sub-chamber (12b).

3. Regulation valve as claimed in claim 1 or 2, **characterized in that** the mounting support (14) is provided by a disc-like or plate-like element having a central opening (16) carrying a section of the thermo element (22), wherein the mounting support (14), the thermo element (22) and the valve plunger (19) provide a sub-assembly being positioned within the valve housing (11), and wherein the mounting support (14) has an outer surface (17) allowing a flow of the liquid medium across the mounting support (14) from the first valve inlet sub-chamber (12a) into the second valve inlet sub-chamber (12b).

4. Regulation valve as claimed in one of claim 1 to 3, **characterized in that** the thermo element (22) acts together with the valve plunger (19, 19') and the first spring element (20) in such a way that at relative low temperatures of the liquid medium the regulation valve is closed by the first spring force being larger than the thermo element force thereby providing a low flow rate of the liquid medium, and that at relative high temperatures of the liquid medium the regulation valve is opened by the thermo element force being larger than the first spring force thereby providing a relative high flow rate of the liquid medium.

## Patentansprüche

1. Regelventil für ein flüssiges Medium, insbesondere für Trinkwasser, umfassend:
ein Ventilgehäuse (11), das eine Ventileinlasskammer (12) und eine Ventilauslasskammer (13) bereitstellt,
einen Ventileinsatz, der in dem Ventilgehäuse (11) positioniert ist, wobei der Ventileinsatz einen Ventilkolben (19, 19') und ein erstes Federelement (20) umfasst,
ein Thermoelement (22), das direkt in dem Strom des flüssigen Mediums positioniert ist und den Ventilkolben (19, 19') trägt, wobei das Thermoelement (22) eine Thermoelementkraft bereitstellt, die abhängig von der Temperatur des flüssigen Mediums in dem Ventilgehäuse (11) auf den Ventilkolben (19, 19') wirkt, wobei die von dem Thermoelement (22) bereitgestellte Thermoelementkraft gegen die erste Federkraft wirkt, die von dem ersten Federelement (20) bereitgestellt wird,
eine Befestigungshalterung (14) für das Thermoelement (22), wobei die Befestigungshalterung (14) die Ventileinlasskammer (12) des Ventilgehäuses (11) in eine erste Ventileinlassteilkammer (12a) und eine zweite Ventileinlassteilkammer (12b) unterteilt, wobei die zweite Ventileinlassteilkammer (12b) zwischen der ersten Ventileinlassteilkammer (12a) und der Ventilauslasskammer (13) positioniert ist,
ein zweites Federelement (25), das in der ersten Ventileinlassteilkammer (12a) positioniert ist und auf eine solche Weise auf die Befestigungshalterung (14) wirkt, dass das zweite Federelement (25) eine zweite Federkraft bereitstellt, die die Befestigungshalterung gegen einen von dem Ventilgehäuse (11) bereitgestellten Anschlag (26) drückt,
**dadurch gekennzeichnet, dass**
die von dem Thermoelement (22) bereitgestellte Thermoelementkraft auf eine solche Weise gegen die von dem ersten Federelement (20) bereitgestellte erste Federkraft wirkt, dass eine ansteigende Temperatur des flüssigen Mediums dazu neigt, das Regelventil zu öffnen, und dass eine sinkende Temperatur des flüssigen Mediums dazu neigt, das Regelventil zu schließen,
der Ventileinsatz ferner einen Ventilkörper (18) umfasst,
der Ventilkörper (18) wenigstens eine relativ große Öffnung (23) bereitstellt, die bei relativ niedrigen Temperaturen des flüssigen Mediums vollständig geschlossen ist und die bei relativ hohen Temperaturen des flüssigen Mediums geöffnet ist,
der Ventilkörper (18) wenigstens eine zusätzliche, relativ kleine Öffnung (24) vorsieht, die geöffnet ist, wenn die wenigstens eine relativ große Öffnung (23) vollständig geschlossen ist und wenn die wenigstens eine relativ große Öffnung (23) geöffnet ist.

2. Regelventil nach Anspruch 1, **dadurch gekennzeichnet, dass** das erste Federelement (20) zwischen dem Ventilkörper (18) und dem Ventilkolben (19, 19') in der zweiten Ventileinlassteilkammer (12b) positioniert ist.

3. Regelventil nach Anspruch 1 oder 2, **dadurch gekennzeichnet, dass** die Befestigungshalterung (14) durch ein scheibenartiges oder plattenartiges Element bereitgestellt ist, das eine zentrale Öffnung (16) aufweist, die einen Abschnitt des Thermoelements (22) trägt, wobei die Befestigungshalterung (14), das Thermoelement (22) und der Ventilkolben (19) eine Unterbaugruppe bereitstellen, die in dem Ventilgehäuse (11) positioniert ist, und wobei die Befestigungshalterung (14) eine Außenfläche (17) aufweist, die einen Strom des flüssigen Mediums über die Befestigungshalterung (14) aus der ersten Ventileinlassteilkammer (12a) in die zweite Ventileinlassteilkammer (12b) ermöglicht.

4. Regelventil nach einem der Ansprüche 1 bis 3, **dadurch gekennzeichnet, dass** das Thermoelement (22) zusammen mit dem Ventilkolben (19, 19') und dem ersten Federelement (20) auf eine solche Weise wirkt, dass das Regelventil bei relativ niedrigen Temperaturen des flüssigen Mediums dadurch geschlossen wird, dass die erste Federkraft größer als die Thermoelementkraft ist und dadurch eine niedrige Durchflussrate des flüssigen Mediums bereitstellt, und dass das Regelventil bei relativ hohen Temperaturen des flüssigen Mediums dadurch geöffnet wird, dass die Thermoelementkraft größer als die erste Federkraft ist und dadurch eine relativ hohe Durchflussrate des flüssigen Mediums bereitstellt.

## Revendications

1. Soupape de régulation pour un milieu liquide, en particulier pour de l'eau potable, comprenant :
un boîtier (11) de soupape offrant une chambre d'entrée (12) de soupape et une chambre de sortie (13) de soupape ;
un insert de soupape étant placé à l'intérieur du boîtier (11) de soupape, l'insert de soupape comprenant un piston (19, 19') de soupape et un premier élément de ressort (20) ;
un thermocouple (22) étant placé directement dans le flux du milieu liquide et soutenant le piston (19, 19') de soupape, le thermocouple (22) fournissant une force de thermocouple qui agit sur le piston (19, 19') de soupape en fonction de la température du milieu liquide à l'intérieur du boîtier (11) de soupape,
dans laquelle la force de thermocouple fournie par le thermocouple (22) s'oppose à la première force de ressort fournie par le premier élément de ressort (20) ;
un support de montage (14) pour le thermocouple (22), le support de montage (14) divisant la chambre d'entrée (12) de soupape du boîtier (11) de soupape en une première sous-chambre d'entrée (12a) de soupape et une seconde sous-chambre d'entrée (12b) de soupape, dans laquelle la seconde sous-chambre d'entrée (12b) de soupape est située entre la première sous-chambre d'entrée (12a) de soupape et la chambre de sortie (13) de soupape ;
un second élément de ressort (25) étant placé dans la première sous-chambre d'entrée (12a) de soupape et agissant sur le support de montage (14) de telle façon que le second élément de ressort (25) fournit une seconde force de ressort qui appuie sur le support de montage et s'oppose à une course (26) fournie par le boîtier (11) de soupape,
**caractérisé en ce que** :
la force de thermocouple fournie par le thermocouple (22) s'oppose à la première force de ressort fournie par le premier élément de ressort (20) de telle façon qu'une augmentation de température du milieu liquide tend à ouvrir la soupape de régulation et qu'une diminution de température du milieu liquide tend à fermer la soupape de régulation ;
l'insert de soupape comprend en outre un corps (18) de soupape, le corps (18) de soupape offrant au moins une ouverture (23) relativement grande qui est complètement fermée à des températures relativement basses du milieu liquide et qui est ouverte à des températures relativement élevées du milieu liquide ;
le corps (18) de soupape offre au moins une ouverture supplémentaire (24) relativement petite qui est ouverte quand ladite ouverture (23) relativement grande est complètement fermée et quand ladite ouverture (23) relativement grande est ouverte.

2. Soupape de régulation selon la revendication 1, **caractérisée en ce que** le premier élément de ressort (20) est placé entre le corps (18) de soupape et le piston (19, 19') de soupape à l'intérieur de la seconde sous-chambre d'entrée (12b) de soupape.

3. Soupape de régulation selon la revendication 1 ou 2, **caractérisée en ce que** le support de montage (14) est pourvu d'un élément genre disque ou genre plaque comportant une ouverture centrale (16) soutenant une section du thermocouple (22), dans laquelle le support de montage (14), le thermocouple (22) et le piston (19) de soupape constituent un sous-ensemble qui est placé à l'intérieur du boîtier (11) de soupape, et dans laquelle le support de montage (14) comporte une surface extérieure (17) permettant un écoulement du milieu liquide à travers le support de montage (14) de la première sous-chambre d'entrée (12a) de soupape à la seconde sous-chambre d'entrée (12b) de soupape.

4. Soupape de régulation selon l'une quelconque des revendications 1 à 3, **caractérisée en ce que** le thermocouple (22) agit conjointement avec le piston (19, 19') de soupape et le premier élément de ressort (20) de telle façon qu'à des températures relativement basses du milieu liquide la soupape de régulation est fermée car la première force de ressort est supérieure à la force de thermocouple, assurant de ce fait un débit faible élevé du milieu liquide, et qu'à des températures relativement élevées du milieu liquide la soupape de régulation est ouverte car la force de thermocouple est supérieure à la première force de ressort, assurant de ce fait un débit relativement élevé du milieu liquide.
